# EUROPEAN PATENT SPECIFICATION

(11) **EP 2 796 479 B1**
(45) Date of publication and mention of the grant of the patent: **28.02.2018**
(21) Application number: 12859170.8
(22) Date of filing: 19.12.2012
(51) Int. Cl.: C08F 8/42, B60C 1/00, C08F 36/04, C08K 3/04, C08K 3/36, C08L 15/00

(54) **MODIFIED CONJUGATED DIENE POLYMER AND METHOD FOR PRODUCING SAME**
MODIFIZIERTES KONJUGIERTES DIENPOLYMER UND HERSTELLUNGSVERFAHREN DAFÜR
POLYMÈRE DIÈNE CONJUGUÉ MODIFIÉ ET SON PROCÉDÉ DE PRODUCTION

(30) Priority: 23.12.2011 JP 2011282517
(43) Date of publication of application: 29.10.2014
(73) Proprietor: JSR Corporation, Minato-ku Tokyo 105-8640 (JP)
(72) Inventor: MORITA, Hiroyuki, Tokyo 105-8640 (JP); YUASA, Takeshi, Tokyo 105-8640 (JP); TANI, Koichiro, Tokyo 105-8640 (JP); NOSAKA, Naoya, Tokyo 105-8640 (JP); TANAKA, Ryoji, Tokyo 105-8640 (JP); OKADA, Koji, Tokyo 105-8640 (JP)
(74) Representative: TBK
(86) International application number: PCT/JP2012/082885
(87) International publication number: WO 2013/094629

(56) References cited:
- WO-A1-2010/044252
- JP-A- 2008 285 558
- JP-A- 2010 116 545
- JP-A- 2010 116 553
- JP-A- 2010 116 554
- JP-A- 2011 514 421

## Description

### Technical Field

The present invention relates to a modified conjugated diene polymer and a method for producing the same.

### Background Art

As rubbers for automobile tires, conjugated diene rubbers (for example, styrene-butadiene copolymers) obtained by emulsion polymerization methods have been known. In recent years, it has been expected to improve low fuel consumption performance of automobiles, and various conjugated diene rubbers capable of realizing excellent low fuel consumption performance have been proposed.

As an example, a conjugated diolefin (co)polymerized rubber characterized in (1) being a (co)polymer rubber of a conjugated diolefin or a conjugated diolefin and an aromatic vinyl compound, (2) having a primary amino group and an alkoxysilyl group which are bonded to a (co)polymer chain, and (3) that a bifunctional or more monomer is copolymerized in the (co)polymer chain, and/or that at least a part of the (co)polymer chain is coupled with a bifunctional or more coupling agent (Patent Document 1) have been proposed.

As another example, there have been proposed a modified diene polymer rubber obtained from a step 1 of polymerizing a conjugated diene monomer or a conjugated diene monomer and an aromatic vinyl monomer in a hydrocarbon solvent in the presence of an alkali metal catalyst to obtain an active polymer having an alkali metal end, and a step 2 of reacting the active polymer with a compound represented by a specific formula to obtain a modified polymer rubber (Patent Document 2).

Furthermore, as a method for producing a modified polymer capable of promoting interactions with silica and carbon black and improving fracture characteristics, wear resistance and low exothermic properties, there have been proposed a method of performing a primary modification reaction in which a hydrocarbyloxysilane compound is reacted with a polymer having organometallic active sites in its molecule, at the active sites, and then performing a secondary modification reaction in which the hydrocarbyloxysilane compound is reacted through a condensation reaction of hydrocarbyloxysilyl groups with each other (Patent Document 3).

### Prior Art Documents

### Patent Documents

Patent Document 1: JP-A-2004-18795
Patent Document 2: JP-A-2005-290355
Patent Document 3: WO 03/048216 A1

### Summary of the Invention

### Problems to be Solved by the Invention

As described above, various conjugated diene rubbers capable of realizing excellent low fuel consumption performance of automobiles have been proposed. However, under financial circumstances such as a price increase of gasoline and environmental circumstances including carbon dioxide emissions, it has been expected to realize further low fuel consumption of automobiles.

Then, an object of the present invention is to provide a modified conjugated diene polymer which can be used as a raw material of a cross-linked polymer which can be used for use in automobile tires (particularly treads) and the like and can enhance low fuel consumption performance of automobiles and the like, and a method for producing the same.

### Means for Solving the Problems

In order to solve the above-mentioned problems, the present inventors have made intensive studies. As a result, it has been found that when a cross-linked polymer is produced by obtaining a conjugated diene polymer with using a specific compound; modifying the conjugated diene polymer to obtain a modified conjugated diene polymer; and using this modified conjugated diene polymer as a raw material, this cross-linked polymer is excellent in physical properties such as low hysteresis loss properties (70° tan δ), wet skid resistance (0°C tan δ) and wear resistance, and can provide excellent low fuel consumption performance, in use in automobile tires and the like, to accomplish the present invention.

Namely, the present invention provides the technical teachings defined in claims 1 to 7.

### Effect of Invention

According to a production method of the present invention, it is possible to obtain a modified conjugated diene polymer which is capable of producing a cross-linked polymer which is excellent in low hysteresis loss properties (70°C tan δ), wet skid resistance (0°C tan δ), wear resistance and the like.

The above-mentioned cross-linked polymer can provide excellent low fuel consumption performance, when it is used as a material for automobile tires (particularly treads) and the like.

### Mode for Carrying Out the Invention

### [Polymerization Step for Obtaining Conjugated Diene Polymer]

A method for producing a modified conjugated diene polymer of the present invention comprises a polymerization step of polymerizing a monomer comprising a conjugated diene compound or a monomer comprising a conjugated diene compound and an aromatic vinyl compound in the presence of a compound having a structure of the following formulae (1) or (2) and an alkali metal compound or an alkaline earth metal compound to obtain a conjugated diene polymer. 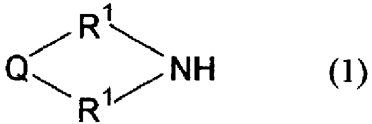 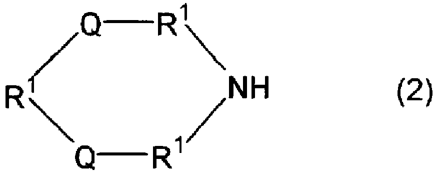 (In the formulae (1) and (2), R¹ is a hydrocarbylene group, and Q is 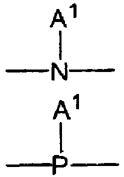 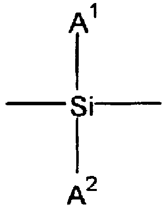 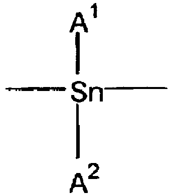 or 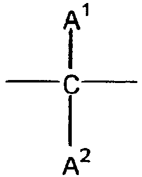 wherein A¹ is a substituted or unsubstituted hydrocarbyl or hydrocarbylene group which has no active hydrogen atom and may contain one or more atoms selected from the group consisting of N, P, O, S, Si and Sn; A² is a hydrocarbyl or hydrocarbylene group; A¹ and A² may combine to form a ring; and R¹ and Q which exist in plurality in the formula may each be same or different.)

"A substituted or unsubstituted group which may contain one or more atoms selected from the group consisting of N, P, O, S, Si and Sn" in A¹ in the formulae (1) and (2) means that carbon atoms in the hydrocarbyl group or the hydrocarbylene group may be partially substituted with N, P, O, S, Si or Sn, or may not be substituted.

As R¹s (hydrocarbylene groups) in the formulae (1) and (2), for example, a methylene group, alkylene groups, arylene groups, aralkylene groups and the like are described. The carbon number of the hydrocarbylene group is, for example, from 1 to 10, although it is not particularly limited.

As the hydrocarbyl groups represented by A¹ contained in Q in the formulae (1) and (2), for example, alkyl groups, aryl groups, aralkyl groups and the like are described. The carbon number of the hydrocarbyl group is, for example, from 1 to 10, although it is not particularly limited.

As the hydrocarbylene groups represented by A¹ contained in Q in the formulae (1) and (2), for example, a methylene group, alkylene groups, arylene groups, aralkylene groups and the like are described. The carbon number of the hydrocarbylene group is, for example, from 1 to 10, although it is not particularly limited.

As the hydrocarbyl groups represented by A² contained in Q in the formulae (1) and (2), for example, alkyl groups, aryl groups, aralkyl groups and the like are described. The carbon number of the hydrocarbyl group is preferably from 1 to 6.

As the hydrocarbylene groups represented by A² contained in Q in the formulae (1) and (2), for example, a methylene group, alkylene groups, arylene groups, aralkylene groups and the like are described. The carbon number of the hydrocarbylene group is preferably from 1 to 6.

The above-mentioned conjugated diene polymer can be obtained, for example, by adding the compound having a structure of the above-mentioned the formula (1) or (2) and the alkali metal compound or alkaline earth metal compound (for example, a lithium compound such as an alkyl lithium), respectively, into a polymerization solution containing monomer(s), a solvent and the like, and mixing the compounds. Furthermore, the compound having the structure of the above-mentioned the formula (1) or (2) and the alkali metal compound or alkaline earth metal compound (for example, the lithium compound such as the alkyl lithium) may be previously mixed before addition into the polymerization solution. Namely, the above-mentioned conjugated diene polymer can be prepared by adding the specific secondary amine and the alkali metal compound or alkaline earth metal compound such as the lithium compound in a polymerization system (in-situ), or the specific secondary amine and the alkali metal compound or alkaline earth metal compound such as the lithium compound, which has been previously prepared, can be added into the polymerization system.

In this connection, as the above-mentioned "compound having the structure of the formula (1) or (2)", two or more kinds of compounds may be used in combination, in any one or both of the compounds of the formulae (1) and (2). As the above-mentioned "alkali metal compound or alkaline earth metal compound", two or more kinds of compounds may be used in combination, in any one or both of the alkali metal compound and the alkaline earth metal compound.

The mixing molar ratio of the compound having the structure of the above-mentioned the formula (1) or (2) and the alkali metal compound or alkaline earth metal compound (the alkali metal compound or alkaline earth metal compound/the compound having the structure of the formula (1) or (2)) is preferably from 0.1 to 1.8, more preferably from 0.8 to 1.6, and particularly preferably from 1.0 to 1.4. When the mixing molar ratio exceeds 1.8, the Mooney viscosity increases which sometimes causes difficulty in kneading. When the mixing molar ratio is less than 0.1, the Mooney viscosity becomes small which sometimes causes a decrease in strength of the cross-linked polymer.

A compound represented by the following formula (4) or (5) is produced by mixing the compound having the structure of the above-mentioned formula (1) or (2) and the alkali metal compound or alkaline earth metal compound (for example, the lithium compound such as the alkyl lithium). The compound represented by the following formula (4) or (5) functions as a polymerization initiator. 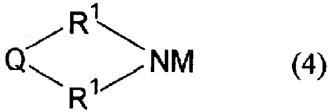 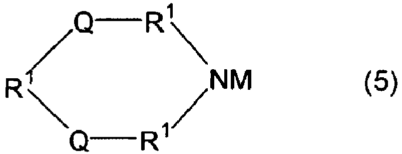 (In the formulae (4) and (5), M is an alkali metal atom or an alkaline earth metal atom. R¹ and Q are as described in the parentheses of the formulae (1) and (2).)

In the present invention, the amount used of the compound having the structure of the above-mentioned the formula (1) or (2) is preferably from 0.2 to 20 mmol per 100 g of monomer(s)
As alkali metals in the alkali metal compounds, lithium, sodium, potassium and the like are described.

As alkaline earth metals in the alkaline earth metal compounds, calcium, magnesium and the like are described.

Above all, lithium is particularly preferable. In this specification, description will be hereinafter made taking lithium as an example. In this connection, in the following description, an embodiment using another alkali metal or alkaline earth metal in place of lithium is also possible.

As the alkyl lithiums as the alkali metal compounds usable in the present invention, for example, alkyl lithiums having 1 to 4 carbon atoms is described.

Examples of the alkyl lithiums having 1 to 4 carbon atoms include methyl lithium, ethyl lithium, n-propyl lithium, iso-propyl lithium, n-butyl lithium, sec-butyl lithium, t-butyl lithium and the like.

Examples of the conjugated diene compounds (conjugated diene monomers) used in the present invention include 1,3-butadiene, isoprene, 2,3-dimethyl-1,3-butadine, 1,3-pentadiene, 1,3-hexadiene, 1,3-heptadiene, 2,3-dimethylbutadiene, 2-phenyl-1,3-butadiene, 3-methyl-1,3-pentadiene, 2-chloro-1,3-butadine and the like. Above all, 1,3-butadine, isoprene, 2,3-dimethyl-1,3-butadiene and the like are preferable.

These compounds may be used either alone or as a combination of two or more thereof.

All these conjugated diene compounds have a similar action, from the viewpoint that it is possible to obtain the conjugated diene polymer having an active lithium end, and therefore, even one not described in Examples described later can be used in the present invention.

Examples of the aromatic vinyl compounds (aromatic vinyl monomers) used in the present invention include styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, tertiary amino group-containing diphenylethylene and the like. Above all, styrene, 4-methylstyrene, α-methylstyrene and the like are preferable.

These compounds may be used either alone or as a combination of two or more thereof.

All these aromatic vinyl compounds have a similar action, from the viewpoint that it is possible to obtain the conjugated diene polymer having the active lithium end, and therefore, even one not described in Examples described later can be used in the present invention.

When the conjugated diene compound and the aromatic vinyl compound are used in combination, it is preferable to use 1,3-butadiene and styrene. These compounds are not only easily available but also excellent in terms of high living properties in anionic polymerization.

Further, when a solution polymerization method is used, the monomer concentration in a solvent is preferably from 5 to 50% by mass, and more preferably from 10 to 30% by mass, from the viewpoint of maintaining a balance between productivity and easiness of polymerization control.

In this connection, when copolymerization is performed with using the conjugated diene compound and the aromatic vinyl compound, the content of the aromatic vinyl compound in a monomer mixture charged is preferably from 3 to 55% by mass, and more preferably from 5 to 50% by mass, from the viewpoint of a balance between low hysteresis loss properties and wet skid resistance of a cross-linked polymer to be obtained.

In the present invention, it is also possible to use as the monomer a compound (hereinafter referred to as another monomer) other than the conjugated diene compound and the aromatic vinyl compound, such as isobutylene.

Furthermore, the conjugated diene polymer of the present invention may have an active site. Methods for introducing the active site include a method of copolymerizing a monomer containing a functional group such as 1-(4-N,N-dimethylaminophenyl)-1-phenylethylene as another monomer and activating a functional group in the polymer with a polymerization initiator. In addition, for example, it is also effective to lithiate functional group moieties of a copolymer containing isobutylene units, para-methylstyrene units and para-halogenated methylstyrene units to form active sites.

In this connection, in the present invention, "the conjugated diene compound is polymerized to obtain the conjugated diene polymer" and "the conjugated diene compound and the aromatic vinyl compound are polymerized to obtain the conjugated diene polymer" are understood to include the case where "the conjugated diene compound and another monomer are polymerized to obtain the conjugated diene polymer" and the case where "the conjugated diene compound, the aromatic vinyl compound and another monomer are polymerized to obtain the conjugated diene polymer", respectively.

The conjugated diene polymer of the present invention is produced by subjecting the monomer(s) such as the conjugated diene compound to anionic polymerization, with using the above-mentioned compounds.

As a polymerization method, any one of a solution polymerization method, a gas-phase polymerization method and a bulk polymerization method can be used. Above all, the solution polymerization method is preferable. Furthermore, as a polymerization type, either of a batch type and a continuous type can be used.

Examples of specific polymerization methods in the case where the solution polymerization method is used include a method of subjecting the monomer(s) such as the conjugated diene compound to the anionic polymerization in a solvent composed of a reaction-inactive organic solvent (for example, an aliphatic, alicyclic or aromatic hydrocarbon compound or the like), in the presence of the polymerization initiator and a randomizer which is used as desired.

It is preferable that the hydrocarbon compound used as the solvent is a compound having 3 to 8 carbon atoms.

Examples of such compounds having 3 to 8 carbon atoms include propane, n-butane, isobutane, n-pentane, isopentane, n-hexane, cyclohexane, propene, 1-butene, isobutene, trans-2-butene, cis-2-butene, 1-pentyne, 2-pentyne, 1-hexene, 2-hexene, benzene, toluene, xylene, ethylbenzene, heptane, cyclopentane, methylcyclopentane, methylcyclohexane, 1-pentene, 2-pentene, cyclohexene and the like.

The hydrocarbon compounds may be used either alone or as a combination of two or more thereof.

The randomizer (vinyl content adjusting agent) used as desired is used for adjustment of the content of vinyl bonds (1,2-bonds and 3,4-bonds) (also referred to as the vinyl content in this specification).

Examples of the randomizers include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine and the like.

The randomizers may be used either alone or as a combination of two or more thereof.

The temperature of the polymerization reaction is preferably from -20 to 150°C, more preferably from 0 to 120°C, and particularly preferably from 20 to 100°C.

The polymerization reaction is preferably conducted under a pressure enough to keep the monomer(s) substantially in a liquid phase. Such a pressure can be obtained by a method of pressurizing the inside of a reactor with a gas inactive to the polymerization reaction, or the like.

### [Method for Producing Modified Conjugated Diene Polymer]

The method for producing a modified conjugated diene polymer of the present invention comprises (a) the above-mentioned polymerization step and (b) a modification step of reacting the active lithium end-containing conjugated diene polymer obtained in the above-mentioned polymerization step and a specific silane compound (modifier) which can react with the active lithium end of this conjugated diene polymer to obtain a modified conjugated diene polymer.

Excellent low hysteresis loss properties and the like can be given to the cross-linked polymer by modifying the conjugated diene polymer, with using a specific silane compound which can react with the active lithium end.

In the present invention, as the specific silane compound which can react with the active lithium end, a hydrocarbyloxysilane compound represented by the following formula (3) is used from the viewpoint of reactivity with the conjugated diene polymer having the active lithium end. 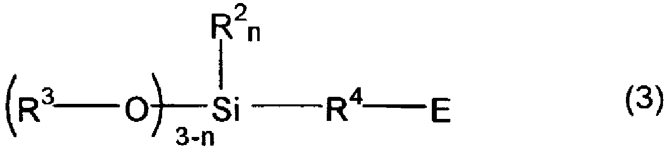 (In the formula (3), E is a functional group which has one or more atoms selected from the group consisting of N, P and S; has no active hydrogen atom; and is bound by any one atom of the above-mentioned N, P or S to R⁴. Part or all of one or more atoms selected from the group consisting of the above-mentioned N, P and S of E may be each protected with a trisubstituted hydrocarbylsilyl group (a hydrocarbylsilyl group in which three Hs (hydrogen atoms) in a structure of "-SiH₃" are each substituted with a hydrocarbyl group). R² and R³ are hydrocarbyl groups. R⁴ is a hydrocarbylene group. n is an integer of 0 to 2. In the formula, R² and R³ which exist in plurality may each be same or different.)

It is preferable that the hydrocarbyl group represented by R² and R³ is an alkyl group having 1 to 20 carbon atoms or an aryl group having 6 to 20 carbon atoms.

It is preferable that the hydrocarbylene group represented by R⁴ is a straight-chain or branched alkylene group having 1 to 20 carbon atoms, which may contain a cyclic structure, or an arylene group.

The active hydrogen atom means a hydrogen atom bound to an atom other than a carbon atom, and preferably, means one having lower bond energy than a carbon-hydrogen bond of polymethylene.

In this connection, for the purpose of adjusting the Mooney viscosity of the modified conjugated diene polymer, silicon tetrachloride or an epoxy group-containing compound (for example, tetraglycidyl-1,3-bisaminomethylcyclohexane or the like) can be used together with the silane compound which can react with the active lithium end.

In the present invention, from the viewpoint of enhancing reactivity with the conjugated diene polymer having the active lithium end, it is preferable to use the hydrocarbyloxysilane compound having two or more hydrocarbyloxy groups.

The modified conjugated diene polymer having either structure of the following the formulae (6) and (7) at one end and having a structure of the following formula (8) at the other end can be obtained by reacting the compound represented by the above-mentioned formula (3) with the conjugated diene polymer obtained in the above-mentioned polymerization step. 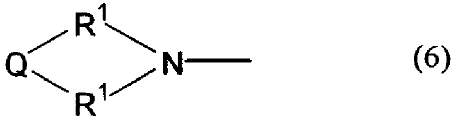 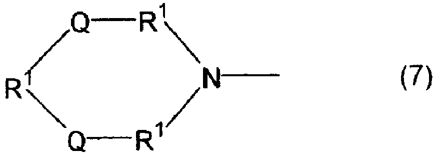 (In the formulae (6) and (7), R¹ and Q are as explained in the parentheses of the formulae (1) and (2).) 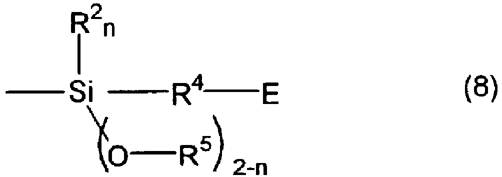 (In the formula (8), E is a functional group which has one or more atoms selected from the group consisting of N, P and S; has no active hydrogen atom; and is bound by any atom of the above-mentioned N, P or S to R⁴. Part or all of one or more atoms selected from the group consisting of the above-mentioned N, P and S of E may be each protected with a hydrocarbylsilyl group in which three Hs (hydrogen atoms) in a structure of "-SiH₃" are each substituted with a hydrocarbyl group. R² is a hydrocarbyl group. R⁴ is a hydrocarbylene group. R⁵ is a hydrogen atom or a hydrocarbyl group. n is an integer of 0 to 2. In the formula, R²s and R⁵s present in plurality may each be same or different.)

In the present invention, as the silane compound which can react with the active lithium end, it is preferable to use one having a group capable of becoming an onium with an onium forming agent, in addition to the group which can react with the active lithium end. Excellent shape-retaining properties can be given to the cross-linked polymer by having the group capable of becoming the onium with the onium forming agent.

The group capable of becoming the onium with the onium forming agent is a group corresponding to E of the above-mentioned formula (3). The group capable of becoming the onium with the onium forming agent is a group substituted with a protective group in order to prevent reacting with the active lithium end of the conjugated diene polymer, and a group capable of becoming the onium by an action of the onium forming agent after deprotection. It is only required to contain at least one group capable of becoming the onium in the molecule. Specific examples thereof include a nitrogen-containing group in which two hydrogen atoms of a primary amino group are substituted with two protective groups, a nitrogen-containing group in which one hydrogen atom of a secondary amino group is substituted with one protective group, a tertiary amino group, an imino group, a pyridyl group, a phosphorus-containing group in which two hydrogen atoms of a primary phosphino group are substituted with two protective groups, a phosphorus-containing group in which one hydrogen atom of a secondary phosphino group is substituted with one protective group, a tertiary phosphino group, a sulfur-containing group in which one hydrogen atom of a thiol is substituted with one protective group, and the like.

As the hydrocarbyloxysilane compounds having the nitrogen-containing group in which two hydrogen atoms of a primary amino group are substituted with two protective groups, the nitrogen-containing group in which one hydrogen atom of a secondary amino group is substituted with one protective group or the tertiary amino group and the hydrocarbyloxy group, for example, N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, 1-(3-triethoxysilylpropyl)-2,2,5,5-tetramethyl-1-aza-2,5-disilacyclopentane, 1-trimethylsilyl-2,2-dimethoxy-1-aza-2-silacyclopentane, N-[3 -(trimethoxysilyl)-propyl] -N,N' -diethyl-N' -trimethylsilyl-ethane-1 ,2-diamine, N-[3-(methyldimethoxysilyl)-propyl] -N,N' -diethyl-N' -trimethylsilyl-p-phenylenediamine, 3-[3-(trimethylsilyl ethyl amino)-1 -pyrrolidinyl] -propyl-methyldiethoxysilane, N-[3-(diethoxymethylsilyl)-propyl]-N-ethyl-N'-(2-ethoxyethyl)-N'-trimethylsilyl-ethane-1,2-diamine, 3-(4-trimethylsilyl-l-piperazino)propylmethyldimethoxysilane, N-trimethylsilyl-N-methylaminopropylmethyldiethoxysilane, 3-(4-trimethylsilyl-1-piperazino)propyltriethoxysilane, N- [2-(trimethoxysilyl)-ethyl] -N,N' ,N' -trimethylethane-1 ,2-diamine, 1-[3-(triethoxysilyl)-propyl]-4-methylpiperazine, 1-[3-(trimethoxysilyl)-propyl]-3-methylimidazolidine, 2-(3-trimethoxysilyl-propyl)-1,3-dimethylimidazolidine, 1-[3-(triethoxysilyl)-propyl] -3 -methylhexahydropyrimidine, 3 - [3 -(tributoxysilyl)-propyl] -1 - methyl-1,2,3,4-tetrahydropyrimidine, 1-(2-ethoxyethyl)-3-[3-(trimethoxysilyl)-propyl]-imidazolidine, 2-{3-[3-(trimethoxysilyl)-propyl]-tetrahydropyrimidine-1-yl}-ethyldimethylamine, 2-(trimethoxysilyl)-1,3-dimethylimidazolidine, 2-(triethoxysilyl)-1,4-diethylpiperazine, 5-(triethoxysilyl)-1,3-dipropylhexahydropyrimidine, 5-(diethoxyethylsilyl)-1,3-diethylhexahydropyrimidine, 2-[3-(2-dimethylaminoethyl)-2-(3-ethyldimethoxysilyl-propyl)-imidazolidine-1-yl]-ethyl-dimethylamine, 5-(3-trimethoxysilyl-propyl)-1,3-bis-(2-methoxyethyl)-hexahydropyrimidine, 3-dimethylaminopropyltrimethoxysilane, 3 -dimethylaminopropyltriethoxysilane, 3-dimethylaminopropylmethyldimethoxysilane, 3-morphorinopropylmethyldimethoxysilane, 3-piperidinopropyltrimethoxysilane, 3-(1-piperadino)propyltriethoxysilane, 3-piperidinopropylmethyldimethoxysilane, bis [3 -(triethoxysilyl)propyl]trimethylsilylamine, compounds in which the alkyl or alkylene group in the above-mentioned compounds is replaced with another alkyl or alkylene group having 1 to 6 carbon atoms, and the like are described.

Above all, preferable examples of the compounds include N,N-bis(triethylsilyl)aminopropylmethyldimethoxysilane, N,N-bis(trimethylsilyl)aminopropylmethyldimethoxysilane, N,N-bis(trimethylsilyl)aminopropylmethyldiethoxysilane, N,N-bis(trimethylsilyl)aminopropyltriethoxysilane, 1-(3-triethoxysilylpropyl)-2,2,5,5-tetramethyl-1-aza-2,5-disilacyclopentane, N,N',N'-tris(trimethylsilyl)-N-(2-aminoethyl)-3-aminopropyltriethoxysilane, 1-trimethylsilyl-2,2-dimethoxy-1-aza-2-silacyclopentane, N-[3 -(trimethoxysilyl)-propyl] -N,N' -diethyl-N' -trimethylsilyl-ethane-1 ,2-diamine, N-[3-(triethoxysilyl)-propyl] -N,N' -diethyl-N' -trimethylsilyl-ethane-1 ,2-diamine, N-trimethylsilyl-N-methylaminopropylmethyldiethoxysilane, 3-(4-trimethylsilyl-1 - piperazino)propyltriethoxysilane, N-[2-(trimethoxysilyl)-ethyl]-N,N',N'-trimethylethane-1,2-diamine, 1-[3-(triethoxysilyl)-propyl]-4-methylpiperazine, 2-(trimethoxysilyl)-1,3-dimethylimidazolidine, 2-(3-trimethoxysilyl-propyl)-1,3-dimethylimidazolidine, 3-dimethylaminopropyltrimethoxysilane, 3-diethylaminopropyltrimethoxysilane, 3-dimethylaminopropyltriethoxysilane, 3-diethylaminopropyltriethoxysilane, bis[3-(triethoxysilyl)propyl]trimethylsilylamine, bis[3-(trimethoxysilyl)propyl]trimethylsilylamine and the like.

As the hydrocarbyloxysilane compounds having the imino group or the pyridyl group and the hydrocarbyloxy group, N-(1,3-dimethylbutylidene)-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine and trimethoxysilyl compounds, methyldiethoxysilyl compounds and ethyldimethoxysilyl compounds corresponding to these triethoxysilyl compounds, N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole, 3-hexamethyleneiminopropyltrimethoxysilane, 3-hexamethyleneiminopropylmethyldimethoxysilane, compounds in which the alkyl or alkylene group in the above-mentioned compounds is replaced with another alkyl or alkylene group having 1 to 6 carbon atoms, and the like are described.

Above all, preferable examples of the compounds include N-(1,3-dimethylbutylidene)-3-(triethoxysilyl)-1-propaneamine, N-(1-methylpropylidene)-3-(triethoxysilyl)-1-propaneamine, N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole and the like.

As the hydrocarbyloxysilane compounds having the phosphorus-containing group in which two hydrogen atoms of a primary phosphino group are substituted with two protective groups, the phosphorus-containing group in which one hydrogen atom of a secondary phosphino group is substituted with one protective group, the tertiary phosphino group or the sulfur-containing group in which one hydrogen atom of a thiol is substituted with one protective group and the hydrocarbyloxy group, P,P-bis(trimethylsilyl)phosphinopropylmethyldimethoxysilane, P,P-bis(trimethylsilyl)phosphinopropyltrimethoxysilane, 3-dimethylphosphinopropyltrimethoxysilane, 3-dimethylphosphinopropylmethyldimethoxysilane, 3-diphenylphosphinopropyltrimethoxysilane, 3-diphenylphosphinopropyltriethoxysilane, 3-diphenylphosphinopropylmeryldimethoxysilane, S-trimethylsilylmercaptopropylmethyldimethoxysilane, S-trimethylsilylmercaptopropyltrimethoxysilane, S-trimethylsilylmercaptopropyltriethoxysilane, S-trimethylsilylmercaptopropylmethyldiethoxysilane, compounds in which the alkyl or alkylene group in the above-mentioned compounds is replaced with another alkyl or alkylene group having 1 to 6 carbon atoms, and the like are described.

Above all, preferable examples of the compounds include 3-dimethylphosphinopropyltrimethoxysilane, 3-dimethylphosphinopropyltriethoxysilane, S-trimethylsilylmercaptopropylmethyldimethoxysilane, S-trimethylsilylmercaptopropyltrimethoxysilane, S-trimethylsilylmercaptopropyltriethoxysilane, S-trimethylsilylmercaptopropylmethyldiethoxysilane and the like.

A site of the active lithium end and a site of the hydrocarbyloxy group are bound to each other by reacting the conjugated diene polymer having the active lithium end with the hydrocarbyloxysilane compound as the silane compound can react with the above-mentioned active lithium end, by which the modified conjugated diene polymer having the group capable of becoming the onium can be obtained. Furthermore, from the viewpoint that the above-mentioned hydrocarbyloxysilane compounds can react with the conjugated diene polymer having the active lithium end; and react or interact with carbon black and/or silica to give excellent low hysteresis loss properties to the cross-linked polymer, all have similar activity. Therefore, even one not described in Examples described later can be used in the present invention.

A modification reaction for modifying the conjugated diene polymer to obtain the modified conjugated diene polymer can be performed, for example, as a solution reaction. The solution reaction may be performed with using an unreacted monomer-containing solution after completion of the polymerization reaction.

The modification reaction may be performed either in a batch system with using a batch type reactor or in a continuous system with using an apparatus such as a multistage continuous type reactor. Furthermore, it is preferable that the modification reaction is performed before performing various operations which are necessary for removing solvent treatment, water treatment, heat treatment and polymer isolation after completion of the polymerization reaction.

The amount of the silane compound which can react with the active lithium end in this modification reaction is preferably from 0.1 molar equivalents or more, and more preferably from 0.3 molar equivalents or more, based on the active site of the conjugated diene polymer obtained by the anionic polymerization. When the amount is less than 0.1 molar equivalents, the progress of the modification reaction is not sufficient, and dispersibility of a reinforcing agent such as carbon black is not sufficiently improved. Thus, the cross-linked polymer is sometimes deteriorated in wear resistance, wet skid resistance and low hysteresis loss properties.

A method for adding the silane compound is not particularly limited, and examples thereof include a method of batch addition, a method of split addition, a method of continuous addition, and the like. Above all, the method of batch addition is preferable.

The temperature of the modification reaction is same as the polymerization temperature of the above-mentioned conjugated diene polymer, and it is preferably from - 20 to 150°C, more preferably from 0 to 120°C, and particularly preferably from 20 to 100°C. When the temperature is low, the viscosity of the polymer tends to increase. When the temperature is high, the active lithium end tends to be deactivated.

The reaction time in the modification reaction is preferably from 1 minute to 5 hours, and more preferably from 2 minutes to 1 hour.

In the present invention, an onium structure can be introduced into the modified conjugated diene polymer by mixing the modified conjugated diene polymer and the onium forming agent.

Examples of the onium forming agents include halogenated metals such as halogenated silicon compounds, halogenated tin compounds, halogenated aluminum compounds, halogenated titanium compounds, halogenated zirconium compounds, halogenated germanium compounds, halogenated gallium compounds and halogenated zinc compounds; inorganic acid esters such as sulfuric acid esters, phosphoric acid esters, carbonic acid esters and nitric acid esters; inorganic acids such as hydrofluoric acid, hydrochloric acid, hydrobromic acid, hydroiodic acid, sulfuric acid, nitric acid, carbonic acid and phosphoric acid; inorganic acid salts such as potassium fluoride, tetramethylammonium fluoride and tetra-n-butylammonium fluoride; organic acids such as carboxylic acids (for example, maleic acid) and sulfonic acids; and the like.

Above all, halogenated silicon compounds, halogenated tin compounds, halogenated aluminum compounds, halogenated titanium compounds, halogenated zirconium compounds, halogenated germanium compounds, halogenated gallium compounds, halogenated zinc compounds, sulfuric acid esters, phosphoric acid esters, carboxylic acids and sulfonic acids are preferable, in terms of easy availability and easy handling of the compounds.

Compound examples of the onium forming agents include silicon tetrachloride, tin tetrachloride, trimethylsilyl chloride, dimethyldichlorosilane, diethylaluminum chloride, zinc chloride, titanium tetrachloride, zirconium tetrachloride, germanium tetrachloride, gallium trichloride, diethyl sulfate, trimethyl phosphate, dimethyl carbonate, maleic acid, benzenesulfonic acid and the like.

Shape-retaining properties of the modified conjugated diene polymer can be enhanced by using the onium forming agent.

Mixing of the modified conjugated diene polymer and the onium forming agent can be performed, for example, in the form of a solution. The mixing may be performed either as a batch system with using a batch type mixer or as a continuous system with using an apparatus such as a multistage continuous type mixer or an in-line mixer.

The amount of the onium forming agent is preferably from 0.5 molar equivalents or more, and more preferably from 1.0 molar equivalent or more, based on the active site (modified site) of the modified conjugated diene polymer. When the amount is less than 0.5 molar equivalents, onium conversion does not sufficiently proceed, which sometimes cause deteriorated shape-retaining properties of the modified conjugated diene polymer.

A method for adding the onium forming agent is not particularly limited, and examples thereof include a method of batch addition, a method of split addition, a method of continuous addition, and the like. Above all, the method of batch addition is preferable.

The temperature at the time when the modified conjugated diene polymer and the onium forming agent are mixed is same as the polymerization temperature of the above-mentioned conjugated diene polymer, and it is preferably from -20 to 150°C, more preferably from 0 to 120°C, and particularly preferably from 20 to 100°C. When the temperature is low, the viscosity of the polymer tends to increase. When the temperature is high, the active lithium end tents to be deteriorated.

After the mixing of the modified conjugated diene polymer and the onium forming agent, the modified conjugated diene polymer can be recovered by operations of removing solvent (for example, steam stripping or the like) and drying, which are known in the production of conjugated diene polymers.

The formation of the onium structure in the modified conjugated diene polymer is performed in the presence of water. Methods for forming the onium structure include, for example, (i) a method of directly adding water into a modified conjugated diene polymer solution, followed by mixing, (ii) a method of adding one obtained by dissolving water in an organic solvent such as an alcohol, which is soluble in both water and an organic solvent, into a modified conjugated diene polymer solution, followed by mixing, and (iii) a method of mixing a modified conjugated diene polymer solution and water at the same time as removing solvent in a step of steam stripping.

In this case, the polymer solution obtained at the time of preparing the modified conjugated diene polymer may be used in a state of the polymer solution as it is without removing solvent. Furthermore, the modified conjugated diene polymer that is obtained by removing solvent of the polymer solution by steam stripping or the like, followed by further drying, may be dissolved again in a solvent such as cyclohexane and then used.

In the modified conjugated diene polymer of the present invention, the Mooney viscosity is adjusted by addition of an extender oil, or the like, as needed, by which workability is able to be improved.

As the extender oils, aroma oil, naphthenic oil, paraffin oil and the like are described. The amount of the extender oil is, for example, from 10 to 50 parts by mass based on 100 parts by mass of the modified conjugated diene polymer.

The polymer composition of the present invention contains the above-mentioned modified conjugated diene polymer as a polymer component.

The ratio of the modified conjugated diene polymer in the polymer composition is preferably from 15% by mass or more, more preferably from 20% by mass or more, and particularly preferably from 25% by mass or more. When the ratio is 15% by mass or more, mechanical properties such as tensile strength and tensile elongation, crack growth resistance and wear resistance of the cross-linked polymer can be more improved.

The polymer composition of the present invention may contain a polymer component (hereinafter also referred to as another polymer component) other than the above-mentioned modified conjugated diene polymer.

As the other polymer components, natural rubber, synthetic isoprene rubber, butadiene rubber, modified butadiene rubber, styrene-butadiene rubber, modified styrene-butadiene rubber, ethylene-α-olefin copolymerized rubber, ethylene-α-olefin-diene copolymerized rubber, acrylonitrile-butadiene copolymerized rubber, chloroprene rubber, halogenated butyl rubber, styrene-isoprene copolymerized rubber, butadiene-isoprene copolymerized rubber, random styrene-butadiene-isoprene copolymerized rubber, styreneacrylonitrile-butadiene copolymerized rubber, acrylonitrile-butadiene copolymerized rubber and polystyrene-polybutadiene-polystyrene block copolymer, and mixtures thereof and the like are described.

Even when the other polymer component which can be used in a polymer composition for tire use is contained, it is possible to produce the cross-linked polymer which is excellent in low hysteresis loss properties.

The amount of the modified conjugated diene polymer in 100 parts by mass of the total amount of the modified conjugated diene polymer and the other polymer components is preferably from 40 parts by mass or more, more preferably from 50 parts by mass or more, and particularly preferably from 60 parts by mass or more.

The polymer composition of the present invention may contain carbon black and/or silica.

Examples of the carbon blacks include carbon blacks of respective grades such as furnace black represented by SRF, GPF, FEF, HAF, ISAF, SAF, ISAF-HS, ISAF-LS, IISAF-HS, HAF-HS and HAF-LS, acetylene black, thermal black, channel black graphite, further graphite fiber and fullerene. Above all, the carbon black having an iodine adsorption amount (IA) of 60 mg/g or more and a dibutyl phthalate oil absorption (DBP) of 80 ml/100 g or more is preferable. Furthermore, from the viewpoint of improving wear resistance of the cross-linked polymer, HAF, ISAF and SAF are more preferable.

Effects of improving grip performance and fracture resistance characteristics of the cross-linked polymer are increased by using the carbon black.

In this connection, the carbon blacks may be used either alone or as a combination of two or more thereof.

Examples of the silicas include wet silica (hydrated silicic acid), dry silica (silicic acid anhydride), colloidal silica, precipitated silica, calcium silicate, aluminum silicate and the like. Of these, wet silica which is most remarkable in an effect of improving fracture resistance characteristics and an effect of achieving a balance between wet grip properties and low rolling resistance properties is preferable. Furthermore, the use of high dispersible type silica is preferable from the viewpoint of improving dispersibility thereof in the polymer composition and improving physical properties and workability. The silicas may be used either alone or as a combination of two or more thereof.

The amount of the carbon black and/or the silica in the polymer composition of the present invention (the total amount, when both these are contained) is preferably from 20 to 130 parts by mass, and more preferably from 25 to 110 parts by mass, based on 100 parts by mass of the polymer components (the total of the modified conjugated diene polymer and the other polymer components), from the viewpoint of reinforcing properties and an effect of improving various physical properties thereby. In this connection, when the amount of the carbon black and/or the silica is small, the effect of improving fracture resistance characteristics tends to become insufficient, while when the amount of the carbon black and/or the silica is large, workability of the polymer composition tends to be deteriorated. It is therefore preferable that the amount is within the above-mentioned numerical value range.

Furthermore, by incorporating a carbon-silica dual phase filler into the polymer composition of the present invention, an excellent advantage similar to that in the case where carbon black and silica are used in combination can be obtained. The carbon-silica dual phase filler is a so-called silica- coating-carbon black in which silica is chemically bound to a surface of carbon black, and is marketed by Cabot Corporation with the trade names of CRX2000, CRX2002 and CRX2006. The amount of the carbon-silica dual phase filler incorporated is preferably from 1 to 100 parts by mass, and more preferably from 5 to 95 parts by mass, based on 100 parts by mass of the total of the polymer components.

When the silica is allowed to be contained as a reinforcing agent in the polymer composition of the present invention, it is preferable to incorporate a silane coupling agent in order to further improve a reinforcing effect. The silane coupling agents include, for example, bis(3-triethoxysilylpropyl) tetrasulfide, bis(3-triethoxysilylpropyl) trisulfide, bis-(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3 -mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, the mercaptosilane compounds exemplified in JP-A-2006-249069, and the like.

Commercially available products include, for example, "NXT Silane", "NXT Z Silane", "NXT-Low-V Silane" and "NXT Ultra Low-V Silane" (trade names) manufactured by Momentive Performance Materials Inc., "VP Si363" (trade name) manufactured by Degussa AG, "11-MERCAPTOUNDECYLTRIMETHOXYSILANE" (trade name) manufactured by Gelest, Inc., "Si69" (trade name) of Evonik Industries AG, and the like.

Of these, bis(3-triethoxysilylpropyl) polysulfide, 3-trimethoxysilylpropylbenzothiazyl tetrasulfide and the mercaptosilane compounds exemplified in JP-A-2006-249069 are preferable, in terms of an effect of improving reinforcing properties, and the like. In this connection, these silane coupling agents may be used either alone or as a combination of two or more thereof. The amount of the silane coupling agent incorporated is preferably from 1 to 20 parts by mass, and more preferably from 3 to 15 parts by mass, based on 100 parts by mass of silica, although it varies depending on the kind of silane coupling agent and the like. When the amount is less than 1 part by mass, the effect as the silane coupling agent tends to become less likely to be sufficiently exhibited. When the amount exceeds 20 parts by mass, the polymer components tend to easily gelate.

In preparing the polymer composition of the present invention, a compatibilizing agent can be added at the time of kneading for the purpose of improving workability in kneading or further improving a balance among wet skid resistance, low hysteresis loss properties and wear resistance. Preferable examples of the compatibilizing agents include organic compounds selected from epoxy group-containing compounds, carboxylic acid compounds, carboxylic acid ester compounds, ketone compounds, ether compounds, aldehyde compounds, hydroxyl group-containing compounds and amino group-containing compounds, and silicone compounds selected from alkoxysilane compounds, siloxane compounds and aminosilane compounds.

The polymer composition of the present invention can contain various chemicals, additives and the like which are commonly used in the rubber industry, as desired. Examples of such chemicals or additives include, for example, cross-linking agents (for example, vulcanizing agents), vulcanizing aids, processing aids, vulcanizing accelerators, process oil, anti-aging agents, anti-scorching agents, zinc white (zinc oxide), stearic acid and the like.

As the vulcanizing agents (cross-linking agents), sulfur, sulfur halides, organic peroxides, quinone dioximes, organic polyvalent amine compounds, methylol group-containing alkylphenol resins and the like are described. Above all, sulfur is usually used. The amount of sulfur is preferably from 0.1 to 5 parts by mass, and more preferably from 0.5 to 3 parts by mass, based on 100 parts by mass of the polymer components (the total of the modified conjugated diene polymer and the other polymer components).

As the vulcanizing aid and the processing aid, stearic acid is usually used. The amount of the vulcanizing aid and the processing aid is usually from 0.5 to 5 parts by mass based on 100 parts by mass of the polymer components.

Furthermore, although not particularly limited, as the vulcanizing accelerators, sulfenamide-based, guanidine-based, thiuram-based, thiourea-based, thiazole-based, dithio-carbamic acid-based and xanthogenic acid-based compounds, and preferably include 2-mercaptobenzothiazole, dibenzothiazyl disulfide, N-cyclohexyl-2-benzothiazylsulfenamide, N-t-butyl-2-benzothiazolesulfenamide, N-oxyethylene-2-benzothiazolesulfenamide, N-oxyethylene-2-benzothiazolesulfenamide, N,N'-diisopropyl-2-benzothiazolesulfenamide, diphenylguanidine, diorthotolylguanidine, orthotolylbisguanidine and the like are described.

The amount of the vulcanizing accelerator is usually from 0.1 to 5 parts by mass, and preferably from 0.4 to 4 parts by mass, based on 100 parts by mass of the polymer components.

The polymer composition of the present invention can be produced by kneading with using a kneader such as an open type kneader (for example, a roll) or a closed type kneader (for example, a Banbury mixer).

Furthermore, the polymer composition of the present invention is applicable as the cross-linked polymer to various rubber products by performing cross-linking (vulcanization) after molding.

Uses of the cross-linked polymer include uses in tires such as tire treads, under treads, carcasses, side walls and parts such as bead portions; and uses in rubber cushions, fenders, belts, hoses, other industrial products and the like. The cross-linked polymer of the present invention is suitably used, particularly as a rubber for tire treads, from the viewpoint of providing low fuel consumption performance.

### Examples

Although the present invention will be specifically described below on the basis of examples, the present invention is not construed as being limited to these examples. In this connection, "parts" and "percentages" in Examples and Comparative Examples are by mass basis unless otherwise specified.

### Comparative Example 1 [Synthesis of Modified Conjugated Diene Polymer A and Evaluation Thereof]

In an autoclave reactor having an internal volume of 5 liters in which the atmosphere was replaced with nitrogen, 4.70 mmol of piperidine, 2,750 g of cyclohexane, 50.0 g of tetrahydrofuran, 125 g of styrene and 365 g of 1,3-butadiene were charged. After adjusting the temperature of contents in the reactor to 10°C, 5.80 mmol of n-butyl lithium was added thereto to initiate polymerization. The polymerization was conducted under adiabatic conditions, and the maximum temperature reached 85°C.

In this connection, piperidine and n-butyl lithium react with each other to form a compound which is a polymerization initiator.

At the time when the polymerization conversion reached 99% (after an elapse of time of 26 minute from the initiation of the polymerization), 10 g of 1,3-butadiene was further added over 2 minutes, and the polymerization was further conducted for 3 minutes. Thereafter, 4.96 mmol of N,N-bis(trimethylsilyl)aminopropylmethyldiethoxysilane was added thereto, and a reaction was performed for 15 minutes to obtain a polymer solution containing a modified conjugated diene polymer.

To the resulting polymer solution containing the modified conjugated diene polymer, 2.0 g of 2,6-di-tert-butyl-p-cresol was added. Then, removing solvent was performed by performing steam striping with using hot water adjusted to pH 9 with sodium hydroxide in order to obtain a modified conjugated diene polymer. Thereafter, the modified conjugated diene polymer was dried with a hot roll adjusted to a temperature of 110°C to obtain a modified conjugated diene polymer A.

The polymerization formula of the modified conjugated diene polymer A (Synthesis Example 1) is shown in Table 1, and properties of the modified conjugated diene polymer A obtained are shown in Table 2. Furthermore, a polymer composition prepared according to the compounding formula shown in Table 3 with using the modified conjugated diene polymer A was vulcanized, and for the resulting cross-linked polymer (vulcanized polymer), physical properties were evaluated. The results thereof are shown in Table 4.

### Examples 1 to 17 and Comparative Example 2 [Synthesis of Modified Conjugated Diene Polymers B to S and Evaluation Thereof]

Modified conjugated diene polymers B to S were obtained in the same manner as in the case of the modified conjugated diene polymer A with the exception that the polymerization formulas shown in Table 1 were used (Synthesis Examples 2 to 19). Properties of the resulting modified conjugated diene polymers B to S are shown in Table 2. Furthermore, polymer compositions prepared according to the compounding formula shown in Table 3 with using the modified conjugated diene polymers B to S were vulcanized, and evaluation of physical properties was performed. The results thereof are shown in Table 4.

In this connection, in the synthesis of the modified conjugated diene polymers L to Q, 2.69 mmol of silicon tetrachloride was further added after the addition of 2,6-di-tert-butyl-p-cresol. Furthermore, in the synthesis of the modified conjugated diene polymer S, methanol was further added after the addition of 2,6-di-tert-butyl-p-cresol to deactivate the reaction.

### [Property Evaluation of Modified Conjugated Diene Polymers]

Measuring methods of various physical property values of the modified conjugated diene polymers are shown below.
(i) Styrene unit amount (%): Determined by ¹H-NMR of 500 MHz.
(ii) Vinyl content (%): Determined by ¹H-NMR of 500 MHz.
(iii) Glass transition temperature: Measured in accordance with ASTM D3418.
(iv) Weight average molecular weight before modification: Determined in terms of polystyrene from the retention time corresponding to the maximum peak height of a GPC curve obtained with using gel permeation chromatography (GPC) (HLC-8120GPC (trade name (manufactured by Tosoh Corporation))).
   (GPC conditions)
   Column: Trade name "GMHHXL" (manufactured by Tosoh Corporation), 2 columns
   Column temperature: 40°C
   Mobile phase: Tetrahydrofuran
   Flow rate: 1.0 ml/min
   Sample concentration: 10 mg/20 ml
(v) Mooney viscosity (ML1+4, 100°C): Measured in accordance with JIS K6300-1 with using an L-rotor under conditions of preheating for 1 minute, rotor operation for 4 minutes and a temperature of 100°C.

### [Method for Kneading Polymer Composition and Property Evaluation]

With using a plastomill (internal volume: 250 ml) equipped with a temperature controller, the modified conjugated diene polymer of the present invention, butadiene rubber, an extender oil, carbon black, silica, a silane coupling agent, stearic acid, an anti-aging agent and zinc oxide were kneaded under conditions of a filling rate of 72% and a rotation number of 60 rpm, as first-step kneading. Then, the composition obtained above was cooled to room temperature, and thereafter kneaded with sulfur and a vulcanizing accelerator, as second-step kneading. This was molded, and vulcanized at 160°C for a predetermined time by means of a vulcanizing press. Evaluation of properties representing the following tire performances was performed.
(i) Mooney viscosity (ML1+4, 100°C): The polymer composition before vulcanization was used as a sample for measurement, and the measurement was carried out in accordance with JIS K6300-1 with using an L-rotor under conditions of preheating for 1 minute, rotor operation for 4 minutes and a temperature of 100°C.
(ii) Tensile strength: The 300% modulus was measured in accordance with JIS K6251.
The value is indicated by the index taking Comparative Example 1 as 100. The larger value shows the larger and better tensile strength is.
(iii) 0°C tan δ: The cross-linked polymer was used as a sample for measurement, and the measurement was carried out under conditions of a tensile dynamic distortion of 0.14%, an angular velocity of 100 radians per second and 0°C, with using a dynamic spectrometer (manufactured by US Rheometric Inc.). The value is indicated by the index taking Comparative Example 1 as 100. The larger value shows, the larger and better wet skid resistance is.
(iv) 70°C tan δ: The cross-linked polymer was used as a sample for measurement, and the measurement was carried out under conditions of a tensile dynamic distortion of 0.7%, an angular velocity of 100 radians per second and 70°C, with using a dynamic spectrometer (made by US Rheometric Inc.). The value is indicated by the index with taking Comparative Example 1 as 100. The larger value shows, the smaller and better low hysteresis loss property is.
(v) Wear resistance: The cross-linked polymer was used as a sample for measurement, and the measurement was carried out under a load of 10 N at 25°C, in accordance with JIS K 6264, with using a DIN abrasion tester (manufactured by Toyo Seiki Seisaku-Sho, Ltd.). The value is indicated by the index with taking Comparative Example 1 as 100. The larger value shows, the better wear resistance is.
(vi) Impact resilience: The cross-linked polymer was used as a sample for measurement, and the measurement was carried out at a measurement temperature of 50°C in accordance with JIS K6255, with using a resilience tester (manufactured by Toyo Seiki Seisaku-Sho, Ltd.). The value is indicated by the index with taking Comparative Example 1 as 100. The larger value shows, the smaller and better low hysteresis loss property is.

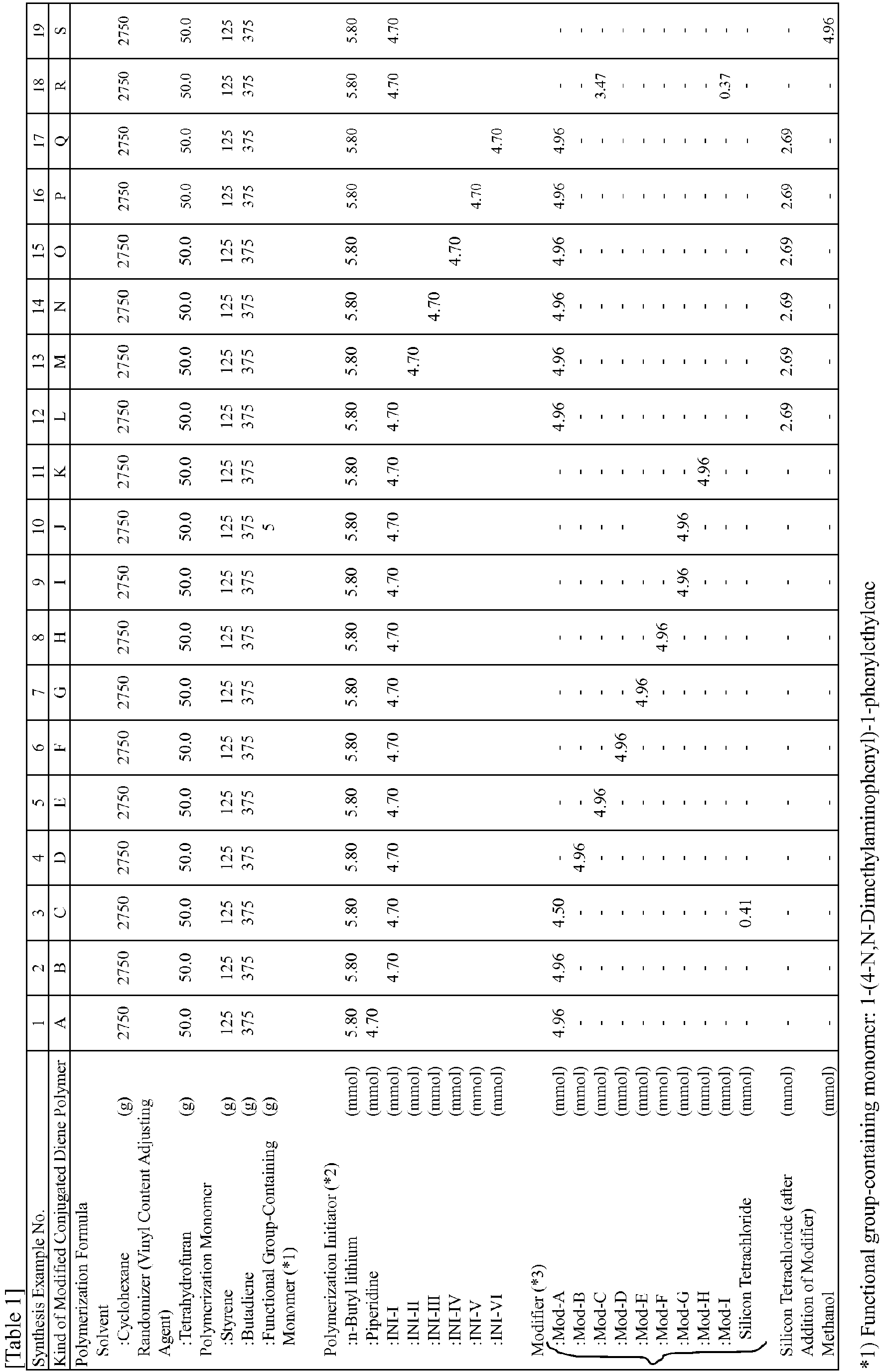

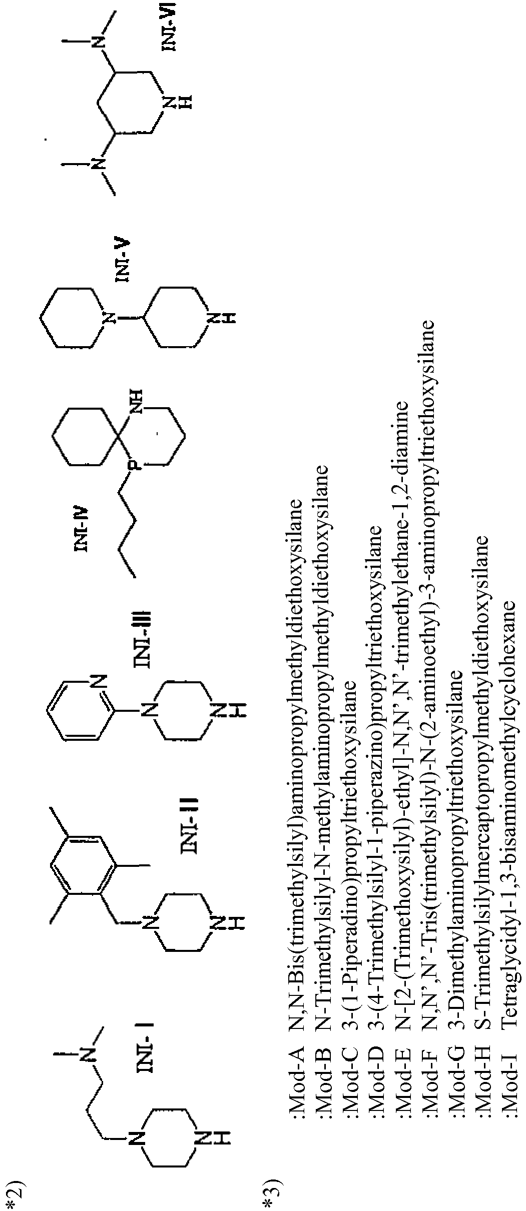

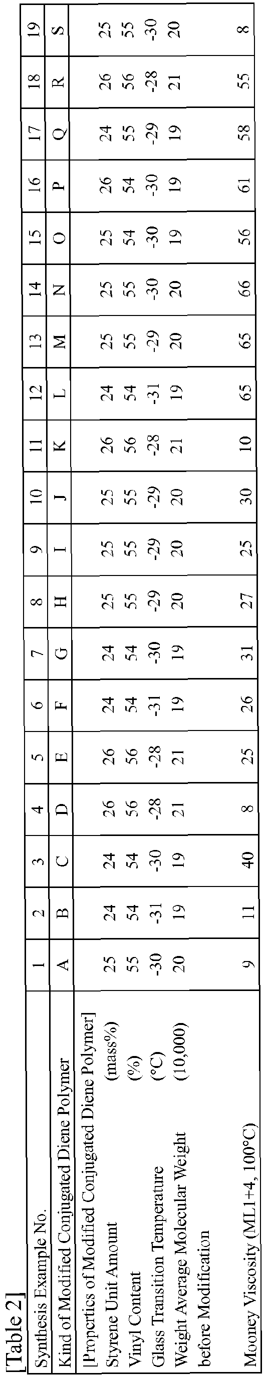

**[Table 3]**

| Compounding Formula (phr) | |
|---|---|
| Modified Conjugated Diene Polymer | 70 |
| Butadiene Rubber *1) | 30 |
| | |
| Extender Oil *2) | 45 |
| Carbon Black *3) | 6.7 |
| Silica *4) | 84 |
| Silane Coupling Agent *5) | 5.0 |
| Stearic Acid | 2.4 |
| Anti-Aging Agent *6) | 1.2 |
| Zinc Oxide | 3.6 |
| | |
| Vulcanizing Accelerator CZ *7) | 2.2 |
| Vulcanizing Accelerator D *8) | 1.8 |
| Sulfur | 1.8 |

| | |
|---|---|
| *1) BR01 manufactured by JSR Corporation *2) SNH46 manufactured by Sankyo Yuka Kogyo K.K. *3) Diablack N339 manufactured by Mitsubishi Chemical Corporation *4) Nipsil AQ manufactured Tosoh Silica Corporation *5) Si 69 manufactured by Evonik Industries AG *6) Nocrac 810NA manufactured by Ouchi Shinko Chemical Industrial Co., Ltd. *7) Nocceler CZ manufactured by Ouchi Shinko Chemical Industrial Co., Ltd. *8) Nocceler D manufactured by Ouchi Shinko Chemical Industrial Co., Ltd. | |

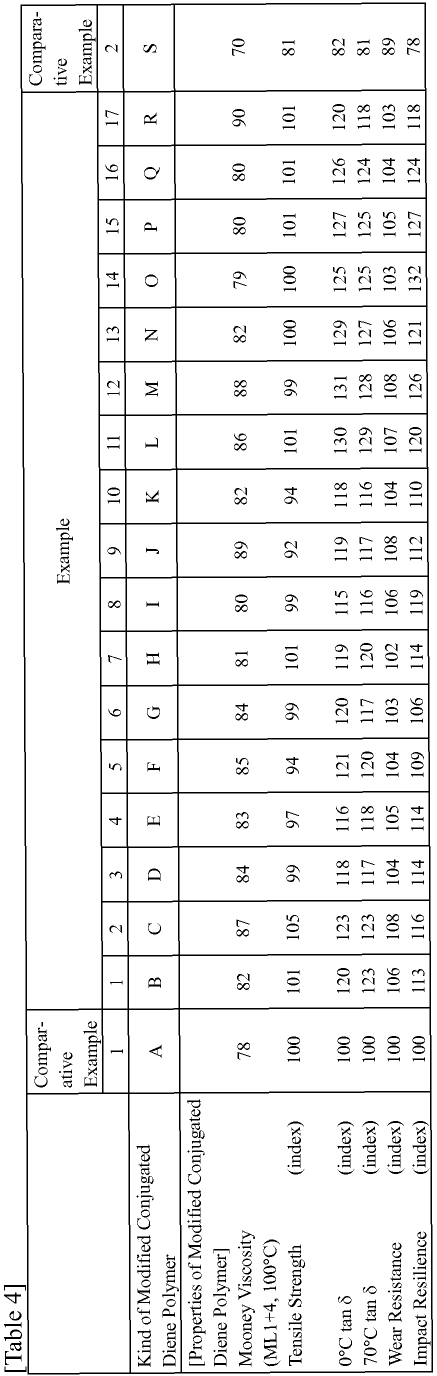

It is known from Table 4 that the low hysteresis loss properties (70°C tan δ, impact resilience), wet skid resistance (0°C tan δ) and wear resistance of the cross-linked polymers in Examples 1 to 17 are excellent, in comparison with Comparative Examples 1 and 2.

## Claims

1. A method for producing a modified conjugated diene polymer comprising
a polymerization step of polymerizing a monomer comprising a conjugated diene compound or a monomer comprising a conjugated diene compound and an aromatic vinyl compound in the presence of a compound having a structure of the following formula (1) or (2) and an alkali metal compound or an alkaline earth metal compound to obtain a conjugated diene polymer,
a modification step of reacting the conjugated diene polymer and a compound having a structure of the following formula (3) to obtain a modified conjugated diene polymer, and
a step of reacting the modified conjugated diene polymer and an onium forming agent to introduce an onium structure into the modified conjugated diene polymer;
and wherein part or all of ends of the modified conjugated diene polymers are converted into oniums by reacting the modified conjugated diene polymer and an onium forming agent. 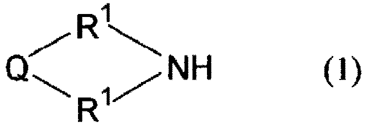 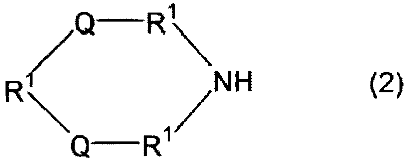 (In the formulae (1) and (2), R¹ is a hydrocarbylene group, and Q is 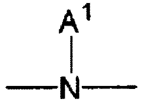 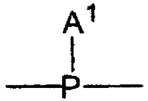 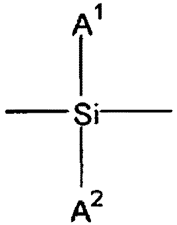 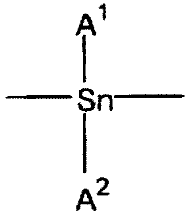 or 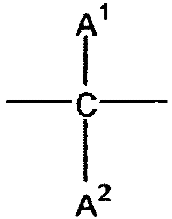 wherein A¹ is a substituted or unsubstituted hydrocarbyl or hydrocarbylene group which has no active hydrogen atom and may contain one or more atoms selected from the group consisting of N, P, O, S, Si and Sn; A² is a hydrocarbyl or hydrocarbylene group; A¹ and A² may combine to form a ring; and R¹ and Q which exist in plurality in the formulae may each be same or different.) 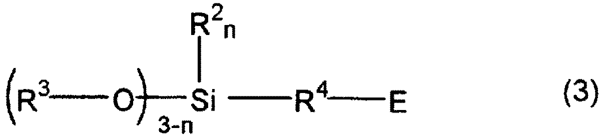 (In formula (3), E is a functional group that has one or more atoms selected from the group consisting of N, P and S; has no active hydrogen atom; and is bound by any one atom of N, P or S to R⁴. Part or all of one or more atoms selected from the group consisting of N, P and S of E may be each protected with a hydrocarbylsilyl group in which three Hs (hydrogen atoms) in a structure of "-SiH₃" are each substituted with a hydrocarbyl group. R² and R³ are hydrocarbyl groups. R⁴ is a hydrocarbylene group. n is an integer of 0 to 2. In the formula, R² and R³ which exist in plurality may each be same or different.)

2. A method for producing a modified conjugated diene polymer comprising
a polymerization step of polymerizing a monomer comprising a conjugated diene compound or a monomer comprising a conjugated diene compound and an aromatic vinyl compound in the presence of a compound having the following formula (4) or (5) to obtain a conjugated diene polymer,
a modification step of reacting the conjugated diene polymer and a compound having a structure of the following formula (3) to obtain a modified conjugated diene polymer, and
a step of reacting the modified conjugated diene polymer and an onium forming agent to introduce an onium structure into the modified conjugated diene polymer;
and wherein part or all of ends of the modified conjugated diene polymers are converted into oniums by reacting the modified conjugated diene polymer and an onium forming agent. 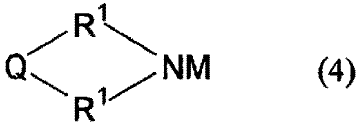 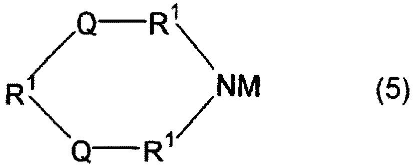 (In formulae (4) and (5), M is an alkali metal atom or an alkaline earth metal atom. R¹ is a hydrocarbylene group. Q is 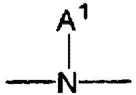 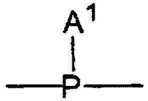 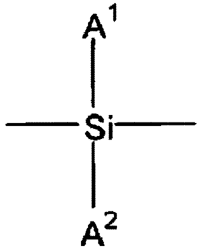 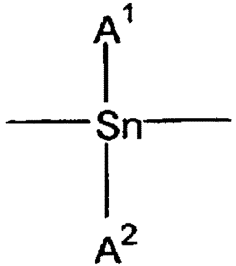 or 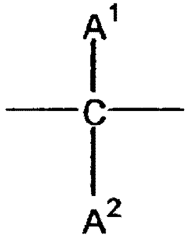 wherein A¹ is a substituted or unsubstituted hydrocarbyl or hydrocarbylene group which has no active hydrogen atom and may contain one or more atoms selected from the group consisting of N, P, O, S, Si and Sn; A² is a hydrocarbyl or hydrocarbylene group; A¹ and A² may combine to form a ring; and R¹ and Q which exist in plurality in the formulae may each be same or different.) 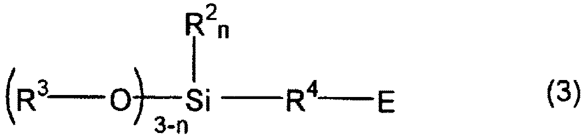 (In formula (3), E is a functional group which has one or more atoms selected from the group consisting of N, P and S; has no active hydrogen atom; and is bound by any one atom of N, P or S to R⁴. Part or all of one or more atoms selected from the group consisting of N, P and S of E may be each protected with a hydrocarbylsilyl group in which three Hs (hydrogen atoms) in a structure of "-SiH₃" are each substituted with a hydrocarbyl group. R² and R³ are hydrocarbyl groups. R⁴ is a hydrocarbylene group. n is an integer of 0 to 2. In the formula, R² and R³ which exist in plurality may each be same or different.)

3. A modified conjugated diene polymer having the following formula (6) or (7) at one end and having a structure of the following formula (8) at the other end. 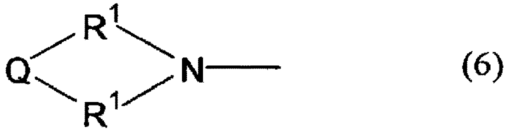 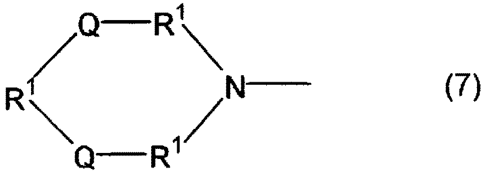 (In formulae (6) and (7), R¹ is a hydrocarbylene group, and Q is 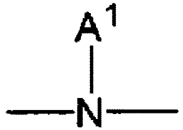 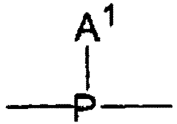 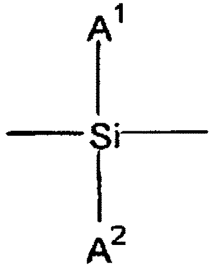 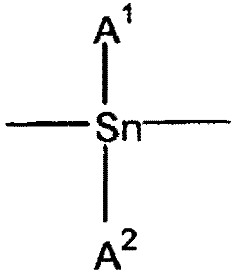 or 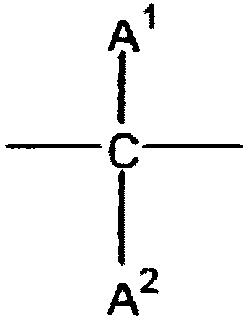 wherein A¹ is a substituted or unsubstituted hydrocarbyl or hydrocarbylene group which has no active hydrogen atom and may contain one or more atoms selected from the group consisting of N, P, O, S, Si and Sn; A² is a hydrocarbyl or hydrocarbylene group; A¹ and A² may combine to form a ring; and R¹ and Q which exist in plurality in the formulae may each be same or different.) 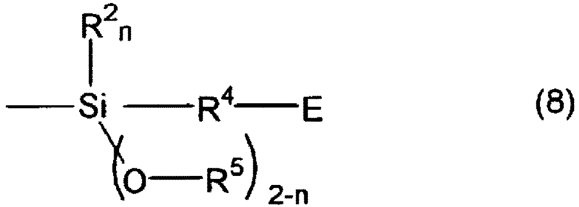 (In formula (8), E is a functional group which has one or more atoms selected from the group consisting of N, P and S; has no active hydrogen atom; and is bound by any one atom of N, P or S to R⁴. Part or all of one or more atoms selected from the group consisting of N, P and S of E may be each protected with a hydrocarbylsilyl group in which three Hs (hydrogen atoms) in a structure of "-SiH₃" are each substituted with a hydrocarbyl group. R² is a hydrocarbyl group. R⁴ is a hydrocarbylene group. R⁵ is a hydrogen atom or a hydrocarbyl group. n is an integer of 0 to 2. In the formula, R² and R⁵ which exist in plurality may each be same or different.)

4. A modified conjugated diene polymer in which part or all of ends are converted into oniums by reacting the modified conjugated diene polymer according to claim 3 and an onium forming agent.

5. A polymer composition comprising the modified conjugated diene polymer according to claim 3 or 4, carbon black and/or silica and a cross-linking agent.

6. A cross-linked polymer obtained by cross-linking the polymer composition according to claim 5.

7. A tire using the cross-linked polymer according to claim 6 at least as a material of a tread or a side wall.

## Patentansprüche

1. Verfahren zum Herstellen eines modifizierten konjugierten Dienpolymers umfassend
einen Polymerisierungsschritt des Polymerisierens eines Monomers umfassend eine konjugierte Dienverbindung oder ein Monomer umfassend eine konjugierte Dienverbindung und eine aromatische Vinylverbindung in der Anwesenheit einer Verbindung mit einer Struktur der folgenden Formel (1) oder (2) und einer Alkalimetallverbindung oder einer Erdalkalimetallverbindung um ein konjugiertes Dienpolymer zu erhalten,
einen Modifizierungsschritt des Reagierens des konjugierten Dienpolymers und einer Verbindung mit einer Struktur der folgenden Formel (3) um ein modifiziertes konjugiertes Dienpolymer zu erhalten, und
einen Schritt des Reagierens des modifizierten konjugierten Dienpolymers und eines Oniumbildungsmittels um eine Oniumstruktur in das modifizierte konjugierte Dienpolymer einzuführen;
und wobei ein Teil oder alle Endstellen des modifizierten konjugierten Dienpolymers in Oniums durch Reagieren des modifizierten konjugierten Dienpolymers und eines Oniumbildungsmittels umgewandelt sind. 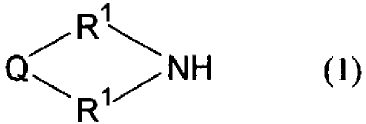 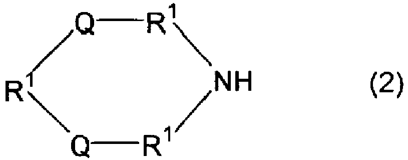 (In den Formeln (1) und (2), ist R¹ eine Hydrocarbylengruppe, und Q ist 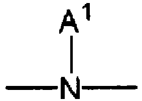 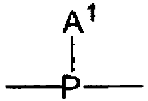 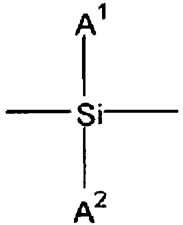 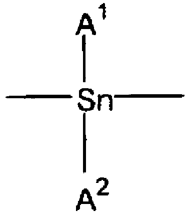 oder 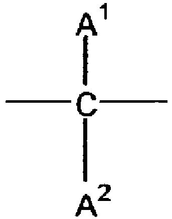 wobei A¹ ist eine substituierte oder unsubstituierte Hydrocarbyl- oder Hydrocarbylengruppe, welche nicht aufweist aktives Wasserstoffatom und enthalten kann ein oder mehrere Atome ausgewählt aus der Gruppe bestehend aus N, P, O, S, Si und Sn; A² eine Hydrocarbyl- oder Hydrocarbylengruppe ist; A¹ und A² kombiniert sein können um einen Ring zu bilden; und R¹ und Q welche in einer Vielzahl in den Formeln existieren, dieselben oder unterschiedlich sein können.) 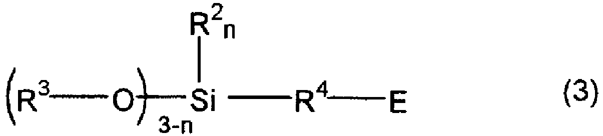 (In der Formel (3), ist E eine funktionelle Gruppe die aufweist ein oder mehr Atome ausgewählt aus der Gruppe bestehend aus N, P und S; nicht aufweist aktives Wasserstoffatom; und gebunden ist durch jedes einzelne Atom von N, P oder S an R⁴. Ein Teil oder alle der ein oder mehr Atome ausgewählt aus der Gruppe bestehend aus N, P und S von E können jeweils geschützt sein mit einer Hydrocarbylsilylgruppe in welcher drei Hs (Wasserstoffatome) in einer Struktur von "-SiH₃" jeweils mit einer Hydrocarbylgruppe substituiert sind. R² und R³ sind Hydrocarbylgruppen. R⁴ ist eine Hydrocarbylengruppe. n ist eine ganze Zahl von 0 bis 2. In der Formel, können R² und R³ welche in einer Vielzahl existieren, dieselben oder unterschiedlich sein.)

2. Verfahren zum Herstellen eines modifizierten konjugierten Dienpolymers umfassend
einen Polymerisationsschritt des Polymerisierens eines Monomers umfassend eine konjugierte Dienverbindung oder ein Monomer umfassend eine konjugierte Dienverbindung und eine aromatische Vinylverbindung in der Anwesenheit einer Verbindung mit der folgenden Formel (4) oder (5) um ein konjugiertes Dienpolymer zu erhalten,
einen Modifikationsschritt des Reagierens des konjugierten Dienpolymers und einer Verbindung mit einer Struktur der folgenden Formel (3) um ein modifiziertes konjugiertes Dienpolymer zu erhalten, und
einen Schritt des Reagierens des modifizierten konjugierten Dienpolymers und eines Oniumbildungsmittels um eine Oniumstruktur in das modifizierte konjugierte Dienpolymer einzuführen;
und wobei ein Teil oder alle Endstellen der modifizierten konjugierten Dienpolymere in Oniums durch Reagieren des modifizierten konjugierten Dienpolymers und eines Oniumbildungsmittels umgewandelt sind. 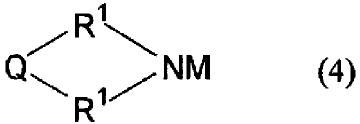 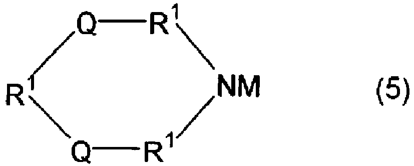 (In den Formeln (4) und (5), ist M ein Alkalimetallatom oder ein Erdalkalimetallatom. R¹ ist eine Hydrocarbylengruppe. Q ist 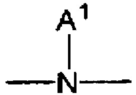 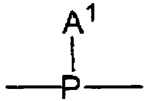 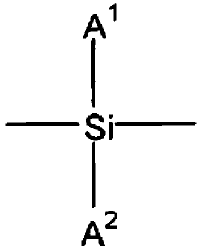 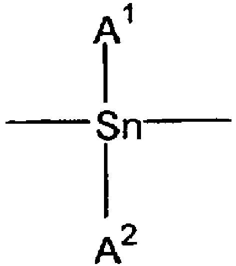 oder 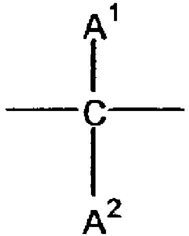 wobei A¹ eine substituierte oder unsubstituierte Hydrocarbyl- oder Hydrocarbylengruppe ist welche nicht aufweist aktives Wasserstoffatom und enthalten kann ein oder mehr Atome ausgewählt aus der Gruppe bestehend aus N, P, O, S, Si und Sn; A² eine Hydrocarbyl- oder Hydrocarbylengruppe ist; A¹ und A² kombiniert sein können um einen Ring zu bilden; und R¹ und Q welche in einer Vielzahl in den Formeln existieren, dieselben oder unterschiedlich sein können.) 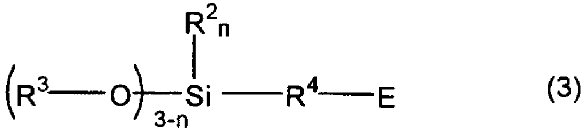 (In der Formel (3), ist E eine funktionelle Gruppe welche aufweist ein oder mehr Atome ausgewählt aus der Gruppe bestehend aus N, P und S; nicht aufweist aktives Wasserstoffatom; und gebunden ist durch jedes einzelne Atom von N, P oder S an R⁴. Ein Teil oder alle von ein oder mehr Atomen ausgewählt aus der Gruppe bestehend aus N, P und S von E können mit einer Hydrocarbylsilylgruppe, in welcher drei Hs (Wasserstoffatome) in einer Struktur von "-SiH₃" jeweils mit einer Hydrocarbylgruppe substituiert sind, geschützt sein. R² und R³ sind Hydrocarbylgruppen. R⁴ ist eine Hydrocarbylengruppe. n ist eine ganze Zahl von 0 bis 2. In der Formel, können R² und R³ welche in einer Vielzahl existieren, dieselben oder unterschiedlich sein.)

3. Modifiziertes konjugiertes Dienpolymer mit der folgenden Formel (6) oder (7) an einer Endstelle und aufweist eine Struktur der folgenden Formel (8) an der anderen Endstelle. 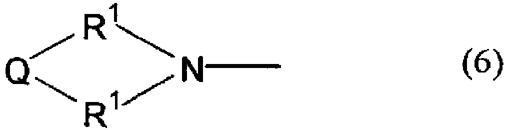 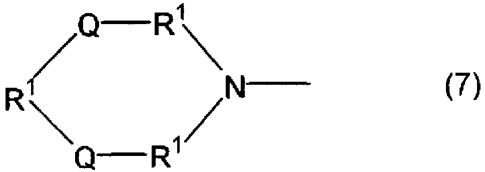 (In den Formeln (6) und (7), ist R¹ eine Hydrocarbylengruppe, und Q ist 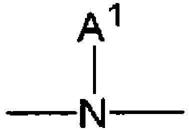 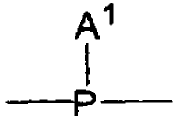 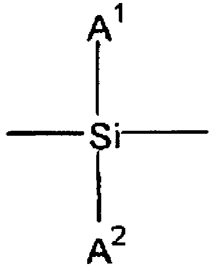 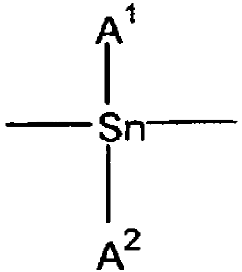 oder 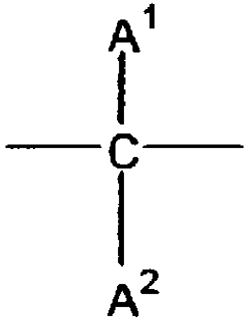 wobei A¹ eine substituierte oder unsubstituierte Hydrocarbyl- oder Hydrocarbylengruppe ist, welche nicht aufweist aktives Wasserstoffatom und enthalten kann ein oder mehr Atome ausgewählt aus der Gruppe bestehend aus N, P, O, S, Si und Sn; A² eine Hydrocarbyl- oder Hydrocarbylengruppe ist; A¹ und A² kombiniert sein können um einen Ring zu bilden; und R¹ und Q welche in einer Vielzahl in den Formeln existieren, dieselben oder unterschiedlich sein können.) 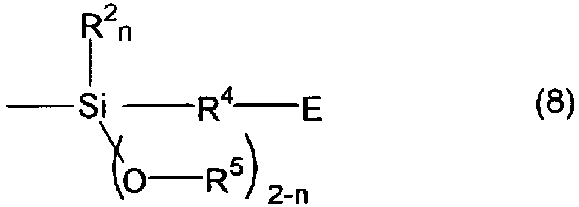 (In der Formel (8) ist E eine funktionelle Gruppe welche aufweist ein oder mehr Atome ausgewählt aus der Gruppe bestehend aus N, P und S; nicht aufweist aktives Wasserstoffatom; und gebunden ist durch jedes einzelne Atom von N, P oder S an R⁴. Ein Teil oder alle von ein oder mehr Atomen ausgewählt aus der Gruppe bestehend aus N, P und S von E können geschützt sein mit einer Hydrocarbylsilylgruppe in welcher drei Hs (Wasserstoffatome) jeweils in einer Struktur von "-SiH₃" mit einer Hydrocarbylgruppe substituiert sind. R² ist eine Hydrocarbylgruppen. R⁴ ist eine Hydrocarbylengruppe. R⁵ ist ein Wasserstoffatom oder eine Hydrocarbylgruppe. n ist eine ganze Zahl von 0 bis 2. In der Formel, können R² und R⁵, welche in einer Vielzahl existieren, gleich oder unterschiedlich sein.)

4. Modifiziertes konjugiertes Dienpolymer in welchem ein Teil oder alle Endstellen umgewandelt sind in Oniums durch Reagieren des modifizierten konjugierten Dienpolymers nach Anspruch 3 und einem Oniumbildungsmittel.

5. Polymerzusammensetzung umfassend das modifizierte konjugierte Dienpolymer nach Anspruch 3 oder 4, Carbonschwarz und/oder Silica und ein Quervernetzungsmittel.

6. Quervernetztes Polymer, erhalten durch Quervernetzen der Polymerzusammensetzung nach Anspruch 5.

7. Reifen verwendend das quervernetzte Polymer nach Anspruch 6 als zumindest ein Material eines Profils oder einer Seitenwand.

## Revendications

1. Procédé de production d'un polymère de diène conjugué modifié comprenant
une étape de polymérisation consistant à polymériser un monomère comprenant un composé diène conjugué ou un monomère comprenant un composé diène conjugué et un composé vinyle aromatique en présence d'un composé ayant une structure de la formule (1) ou (2) suivante et d'un composé de métal alcalin ou d'un composé de métal alcalino-terreux pour obtenir un polymère de diène conjugué,
une étape de modification consistant à faire réagir le polymère de diène conjugué et un composé ayant une structure de la formule (3) suivante pour obtenir un polymère de diène conjugué modifié, et
une étape de réaction du polymère de diène conjugué modifié et d'un agent de formation d'onium pour introduire une structure onium dans le polymère de diène conjugué modifié ;
et dans lequel une partie ou la totalité des extrémités des polymères de diènes conjugués modifiés sont converties en onium en faisant réagir le polymère de diène conjugué modifié et un agent de formation d'onium. 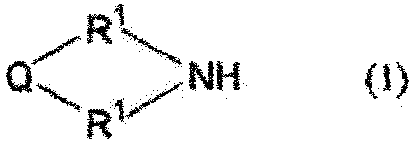 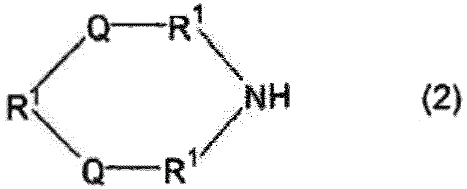 (Dans les formules (1) et (2), R¹ est un groupe hydrocarbylène, et Q est 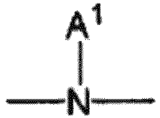 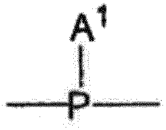 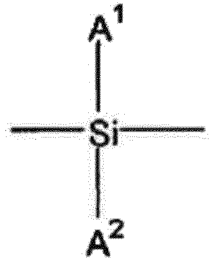 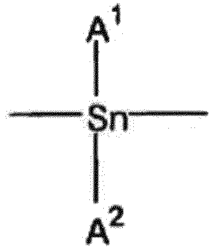 ou 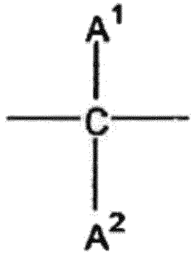 dans lequel A¹ est un groupe hydrocarbyle ou hydrocarbylène substitué ou non substitué qui n'a pas d'atome d'hydrogène actif et peut contenir un ou plusieurs atomes choisis dans le groupe constitué par le N, le P, l'O, le S, le Si et le Sn ; A² est un groupe hydrocarbyle ou hydrocarbylène ; A¹ et A² peuvent se combiner pour former un cycle ; et R¹ et Q qui existent en pluralité dans les formules peuvent chacun être identiques ou différents.) 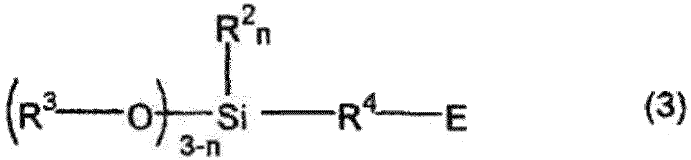 (Dans la formule (3), E est un groupe fonctionnel qui a un ou plusieurs atomes choisis dans le groupe constitué par le N, le P et le S ; n'a pas d'atome d'hydrogène actif ; et est lié par un atome quelconque parmi un N, un P ou un S à R⁴. Tout ou partie d'un ou de plusieurs atomes choisis dans le groupe constitué par le N, le P et le S de E peuvent être chacun protégés par un groupe hydrocarbylsilyle dans lequel trois H (atomes d'hydrogène) dans une structure de « -SiH₃ » sont chacun substitués par un groupe hydrocarbyle, R² et R³ sont des groupes hydrocarbyle. R⁴ est un groupe hydrocarbylène. n est un nombre entier de 0 à 2. Dans la formule, R² et R³ qui existent en pluralité peuvent être chacun identiques ou différents.)

2. Procédé de production d'un polymère de diène conjugué modifié comprenant
une étape de polymérisation consistant à polymériser un monomère comprenant un composé diène conjugué ou un monomère comprenant un composé diène conjugué et un composé vinyle aromatique en présence d'un composé ayant la formule (4) ou (5) suivante pour obtenir un polymère de diène conjugué,
une étape de modification consistant à faire réagir le polymère de diène conjugué et un composé ayant une structure de la formule (3) suivante pour obtenir un polymère de diène conjugué modifié, et
une étape de réaction du polymère de diène conjugué modifié et d'un agent de formation d'onium pour introduire une structure onium dans le polymère de diène conjugué modifié ;
et dans lequel une partie ou la totalité des extrémités des polymères de diènes conjugués modifiés sont converties en onium en faisant réagir le polymère de diène conjugué modifié et un agent de formation d'onium. 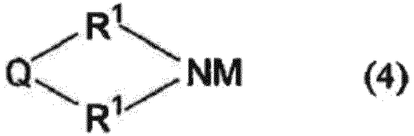 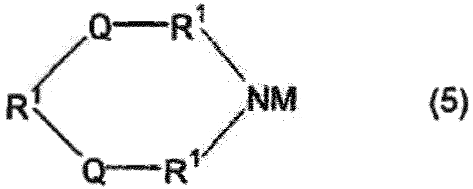 (Dans les formules (4) et (5), M est un atome de métal alcalin ou un atome de métal alcalino-terreux, R¹ est un groupe hydrocarbylène. Q est 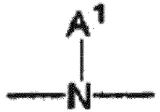 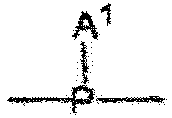 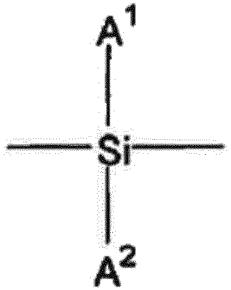 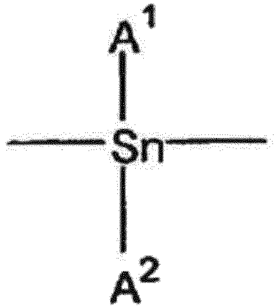 ou 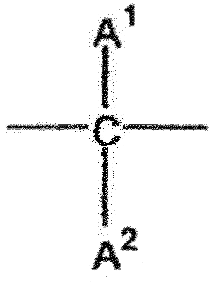 dans lequel A¹ est un groupe hydrocarbyle ou hydrocarbylène substitué ou non substitué qui n'a pas d'atome d'hydrogène actif et peut contenir un ou plusieurs atomes choisis dans le groupe constitué par le N, le P, l'O, le S, le Si et le Sn ; A² est un groupe hydrocarbyle ou hydrocarbylène ; A¹ et A² peuvent se combiner pour former un cycle ; et R¹ et Q qui existent en pluralité dans les formules peuvent chacun être identiques ou différents.) 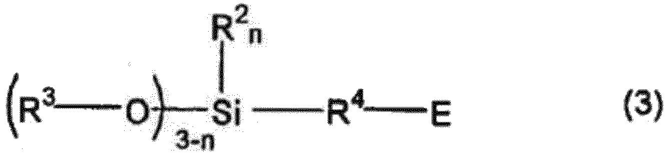 (Dans la formule (3), E est un groupe fonctionnel qui a un ou plusieurs atomes choisis dans le groupe constitué par le N, le P et le S ; n'a pas d'atome d'hydrogène actif ; et est lié par un atome quelconque parmi un N, un P ou un S à R⁴. Tout ou partie d'un ou de plusieurs atomes choisis dans le groupe constitué par le N, le P et le S de E peuvent être chacun protégés par un groupe hydrocarbylsilyle dans lequel trois H (atomes d'hydrogène) dans une structure de « -SiH₃ » sont chacun substitués par un groupe hydrocarbyle, R² et R³ sont des groupes hydrocarbyle. R⁴ est un groupe hydrocarbylène. n est un nombre entier de 0 à 2. Dans la formule, R² et R³ qui existent en pluralité peuvent être chacun identiques ou différents.)

3. Polymère de diène conjugué modifié ayant la formule (6) ou (7) suivante à une extrémité et ayant une structure de la formule (8) suivante à l'autre extrémité. 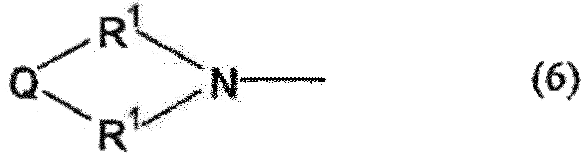 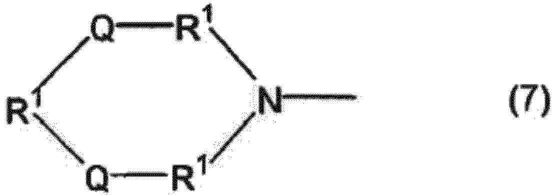 (Dans les formules (6) et (7), R¹ est un groupe hydrocarbylène, et Q est 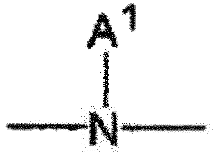 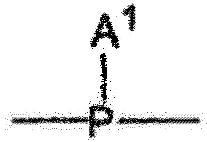 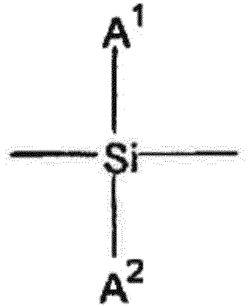 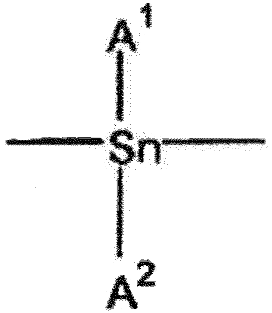 ou 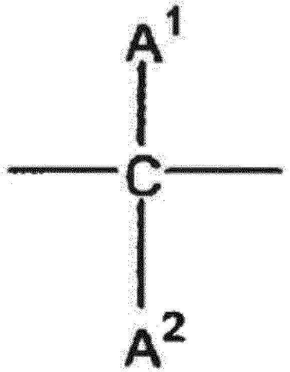 dans lequel A¹ est un groupe hydrocarbyle ou hydrocarbylène substitué ou non substitué qui n'a pas d'atome d'hydrogène actif et peut contenir un ou plusieurs atomes choisis dans le groupe constitué par le N, le P, l'O, le S, le Si et le Sn ; A² est un groupe hydrocarbyle ou hydrocarbylène ; A¹ et A² peuvent se combiner pour former un cycle ; et R¹ et Q qui existent en pluralité dans les formules peuvent chacun être identiques ou différents.) 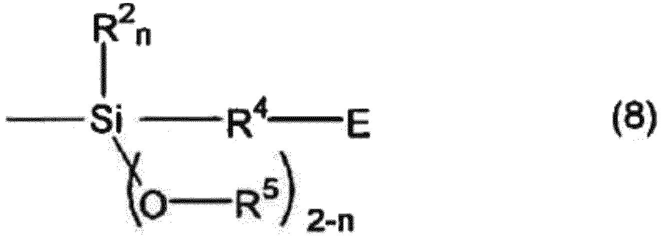 (Dans la formule (8), E est un groupe fonctionnel qui a un ou plusieurs atomes choisis dans le groupe constitué par le N, le P et le S ; n'a pas d'atome d'hydrogène actif ; et est lié par un atome quelconque parmi un N, un P ou un S à R⁴. Tout ou partie d'un ou de plusieurs atomes choisis dans le groupe constitué par le N, le P et le S de E peuvent être chacun protégés par un groupe hydrocarbylsilyle dans lequel trois H (atomes d'hydrogène) dans une structure de « -SiH₃ » sont chacun substitués par un groupe hydrocarbyle. R² est un groupe hydrocarbyle. R⁴ est un groupe hydrocarbylène. R⁵ est un atome d'hydrogène ou un groupe hydrocarbyle. n est un nombre entier de 0 à 2. Dans la formule, R² et R⁵ qui existent en pluralité peuvent être chacun identiques ou différents.)

4. Polymère de diène conjugué modifié dans lequel une partie ou la totalité des extrémités sont converties en onium en faisant réagir le polymère de diène conjugué modifié selon la revendication 3 et un agent de formation d'onium.

5. Composition de polymère comprenant le polymère de diène conjugué modifié selon la revendication 3 ou 4, du noir de carbone et/ou de la silice et un agent de réticulation.

6. Polymère réticulé obtenu par réticulation de la composition de polymère selon la revendication 5.

7. Pneumatique utilisant le polymère réticulé selon la revendication 6 au moins en tant que matériau d'une bande de roulement ou d'un flanc.
